# EUROPEAN PATENT SPECIFICATION

(11) **EP 2 276 770 B1**
(45) Date of publication and mention of the grant of the patent: **13.04.2016**
(21) Application number: 09732329.9
(22) Date of filing: 16.04.2009
(51) Int. Cl.: C07F 7/10, C07F 7/22, C08G 59/60

(54) **SILYLIMIDAZOLIUM SALT COMPLEXES**
SILYLIMIDAZOL-SALZKOMPLEXE
COMPLEXES DE SEL DE SILYLIMIDAZOLIUM

(30) Priority: 18.04.2008 US 46039 P
(43) Date of publication of application: 26.01.2011
(73) Proprietor: Dow Global Technologies LLC, Midland, MI 48674 (US)
(72) Inventor: DEGROOT, Marty, Midland MI 48640 (US)
(74) Representative: Beck Greener
(86) International application number: PCT/US2009/040828
(87) International publication number: WO 2009/129399

(56) References cited:
- JP-A- 8 245 762
- JP-A- 58 194 918
- JP-A- 2002 260 729
- BASSINDALE, ALAN R. ET AL: "Nucleophile-assisted racemization of halosilanes; an alternative pathway involving halide exchange" JOURNAL OF ORGANOMETALLIC CHEMISTRY , 341(1-3), 213-24 CODEN: JORCAI; ISSN: 0022-328X, 1988, XP002532329
- VORONKOV, M. G. ET AL: "Structure of triethylhalosilane complexes with 1-vinyl- and 1-ethylimidazoles" ZHURNAL OBSHCHEI KHIMII , 61(10), 2242-4 CODEN: ZOKHA4; ISSN: 0044-460X, 1991, XP002532330

## Description

The present invention relates to silylimidazolium salt complexes and their use as latent catalysts for curing epoxy resins.

It is known in the art to use silylimidazoles as curing agents or accelerators for curing epoxy resins. JP 58194918 describes the use of neutral silyl and stannyl imidazole complexes as curing agents for curing epoxy resins. JP 2003292646 describes thermoplastic resins containing Si or Ti coupling agents with a trimethoxysilylimidazole compound used as a modifier. JP 08245762 describes epoxy resin compositions for semiconductor devices that comprise 1-(trialkylsilyl)imidazoles as crosslinking accelerators.

Some prior art references also disclose the use of imidazolium salts as curing agents or catalysts. For example, JP 11286536 describes the use of 1,2-dimethyl-3-R₁-substituted imidazolium salts of tetrasubstituted borates as curing accelerators and curing agents. JP 10120690 describes epoxy resin compositions comprising imidazolium chloride salts as crosslinking catalysts. U.S. Patent No. 3,635,894 describes the use of an imidazolium salt curing agent for curing a bisphenol A-epichlorohydrin copolymer.

It is also known in the art to use 2-methylimidazole-boric acid as a latent catalyst for curing epoxy resins. WO 96/12752 discloses an epoxy resin cured by 2-methylimidazole-boric acid latent catalyst useful for electrical laminates applications. However, the cure temperature of the epoxy resin catalyzed by the 2-methylimidazole-boric acid is not tunable.

However, there is no disclosure nor suggestion in the prior art that teaches silylimidazolium salt complexes and their use as latent catalysts for curing epoxy resins. There is also no disclosure nor suggestion in the prior art that teaches the use of silylimidazolium salt complexes as tunable latent catalysts for curing epoxy resins at various high curing temperatures.

Zarudnitskii, E. V. et al. (Synthesis 2006, 8, 1279-1282) describes a method of synthesizing 1-methyl-3-(trimethylsilyl) imidazolium bromide. However, Zarudnitskii et al. do not teach the use of 1-methyl-3-(trimethylsilyl) imidazolium bromide as a catalyst for epoxy curing applications.

Accordingly, there is a need to develop new latent catalysts for curing epoxy resins at a higher temperature (e.g. greater than 120 °C) and are also tunable at various high curing temperatures.

One aspect of the present invention is directed to the use as a latent catalyst for curing an epoxy resin of a silylimidazolium salt complex represented by the following Formula I: 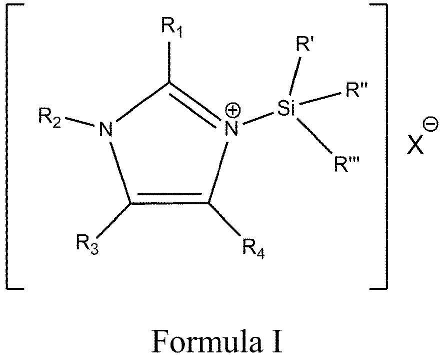 wherein
R₁-R₄ are substituents of the imidazole ring and R₁-R₄ each independently represents an organic group that forms a stable imidazole ring within the silylimidazolium salt complex;
R', R" and R'" are substituents of the silyl functional group and R', R", and R'" each independently represents an organic group that forms a stable silyl function group within the silylimidazolium salt complex; and
X⁻ is an anion which forms a stable salt complex with the silylimidazolium cation within the silyimidazolium salt complex.

Another aspect of the present invention is directed to a thermosettable epoxy resin composition comprising a) an epoxy resin, b) a curing agent, and c) a catalyst; wherein the catalyst comprises a silylimidazolium salt as defined above.

Figure 1 is a graphical illustration showing the effects of varying anion X- of the silylimidazolium salt complexes of the present invention on Differential Scanning Calorimetry (DSC) cure profiles of an epoxy resin composition using the silylimidazolium salt complexes as latent catalysts.

Figure 2 is a graphical illustration showing the effects of varying silyl substituents R', R", and R"' of the silylimidazolium salt complexes of the present invention on DSC cure profiles of an epoxy resin composition using the silylimidazolium salt complexes as latent catalysts.

In the following detailed description, the specific embodiments of the present invention are described in connection with its preferred embodiments. However, to the extent that the following description is specific to a particular embodiment or a particular use of the present techniques, it is intended to be illustrative only and merely provides a concise description of the exemplary embodiments. Accordingly, the present invention is not limited to the specific embodiments described below, but rather; the invention includes all alternatives, modifications, and equivalents falling within the true scope of the appended claims.

Unless otherwise stated, a reference to a compound, a component, or a material includes the compound, component, or material by itself, as well as in combination with other compounds, components, or materials, such as mixtures or combinations of compounds.

As used herein, the singular forms "a," "an," and "the" include the plural reference unless the context clearly dictates otherwise.

The present invention provides silylimidazolium salt complexes which are particular useful as latent catalysts for curing epoxy resins. The silylimidazolium salt complex of the present invention comprises an imidazole ring with one of the nitrogen atoms on the imidazole ring protected by a silyl functional group. The silyl functional group deactivates the imidazole ring such that the silylimidazolium salt complex is inert at room temperature (e.g. ~25°C) and activated at a higher temperature (e.g. >120°C). At the higher temperature, the silylimidazolium salt complex is thermally activated to form an active imidazole complex, which is useful as a catalyst (a latent catalyst) for curing epoxy resins.

The silylimidazolium salt complexes of the present invention comprise an imidazole ring with a silyl functional group attached to one of the nitrogen atoms in the imidazole ring.

The silyimidazolium salt complexes of the present invention are stable salt complexes, which means that they can be isolated as solids and do not convert back to the imidazole and the silyl functional group components at room temperature (e.g. about 25°C).

The stable silylimidazolium salt complexes of the present invention can be activated at elevated temperatures to form complexes that are catalytically active for epoxide ring-opening reactions in the curing of epoxy resins.

Preferred examples of the silylimidazolium salt complexes of the present invention are represented by the following Formula I:

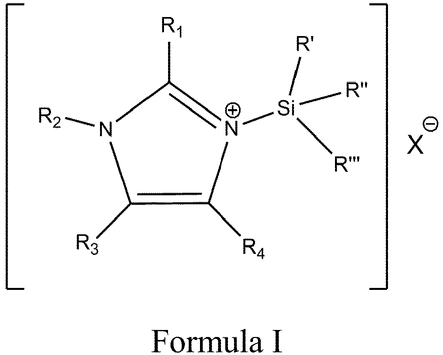

The anion X⁻, the substituents R₁-R₄ of the imidazole ring, and the substituents R', R", and R"' of the silyl functional group in the above Formula I of the silylimidazolium salt complexes may be any variables which form a stable silylimidazolium salt complex.

The anion X⁻ in the above Formula I of the silylimidazolium salt complexes may be any anion, which form a stable salt complex with the silylimidazolium cation within the silyimidazolium salt complex.

Examples of the anion X⁻ in the above Formula I of the silylimidazolium salt complexes may include a halide, R-SO₃⁻, PF₆⁻, or BR₄; and wherein R represents a halide, a substituted or unsubstituted alkyl group, a substituted or unsubstituted alkoxy group, a substituted or unsubstituted aryl group, or CF₃⁻.

Preferred examples of the halide include Br⁻ and I⁻, preferred examples of the alkyl group include C₁-C₈ alkyl group, and preferred examples of aryl group include C₆-C₁₀ aryl group.

The substituents R₁-R₄ of the imidazole ring in the above Formula I of the silylimidazolium salt complexes each may independently represent any organic group that forms a stable imidazole ring within the silylimidazolium complex.

Examples of the substituents R₁-R₄ of the imidazole ring in the above Formula I of the silylimidazolium salt complexes may include a hydrogen atom, a halide (e.g. Br⁻ or I⁻), a substituted or unsubstituted alkyl, a substituted or unsubstituted alkoxy, or a substituted or unsubstituted aryl group. Preferred examples of alkyl group include C₁-C₈ alkyl and preferred examples of aryl group include C₆-C₁₀ aryl.

The substituents R', R", and R'" of the silyl functional group in the above Formula I of the silylimidazolium salt complexes may each independently represent any organic group that forms a stable silyl functional group within the silylimidazolium complex.

Examples of the substituents R', R", and R"' of the silyl functional group in the above Formula I of the silylimidazolium salt complexes may include a substituted or unsubstituted alkyl, a substituted or unsubstituted alkoxy, or a substituted or unsubstituted aryl group. Preferred examples of alkyl group include C₁-C₈ alkyl and preferred examples of aryl group include C₆-C₁₀ aryl.

The silylimidazolium salt complexes of the present invention can be used as latent catalysts for curing epoxy resins with (a) high active temperatures (e.g. greater than 120°C) and (b) tunable active temperatures for various requirements of applications of the latent catalysts.

As used herein, the term "latent catalyst" is referred to a catalyst which is inert at room temperature (e.g. ~25°C) and active at a higher temperature ("active temperature").

The term "active temperature" for a latent catalyst used for curing resins (e.g. epoxy resins) is referred to herein as the temperature at which the latent catalyst becomes active or at which the onset of curing begins ("onset cure temperature").

The term "active temperature range" is referred to herein as the temperature range between the onset and maximum cure temperature when the latent catalyst is used for curing resins.

The terms "tunable latent catalyst" is referred to herein as the properties (e.g. active temperature) of the latent catalyst can be adjusted (e.g. by changing the identities of the substituents of the silylimidaolium salt complexes of the present invention) to meet various catalyst applications requirements.

In general, the active temperature for the silylimidazolium salt complexes of the present invention is greater than 120°C. Preferably, the active temperature range of the silylimidazolium salt complexes of the present invention is from 120°C to 230°C, more preferably, from 150°C to 230°C, and most preferably, from 180°C to 220°C.

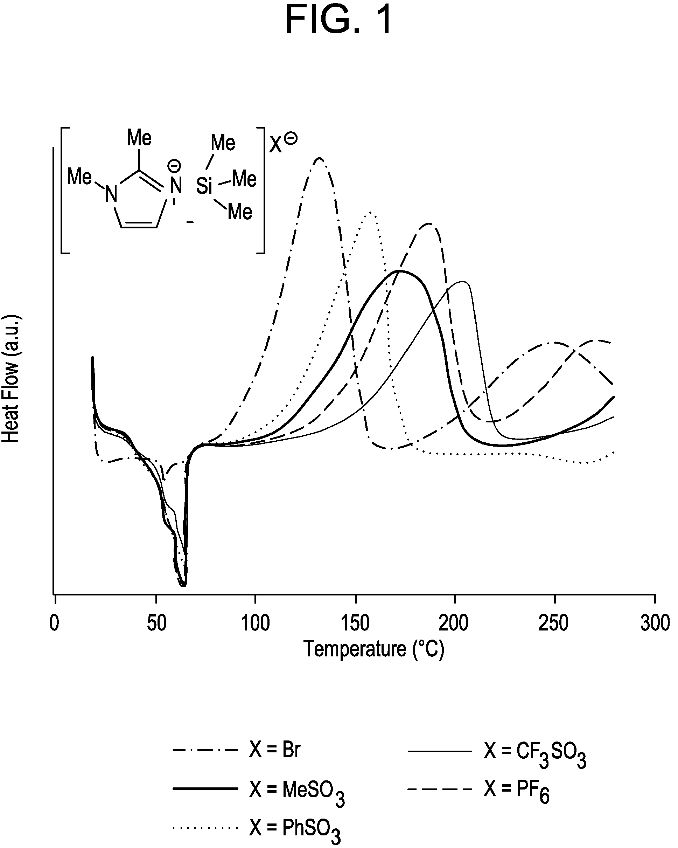

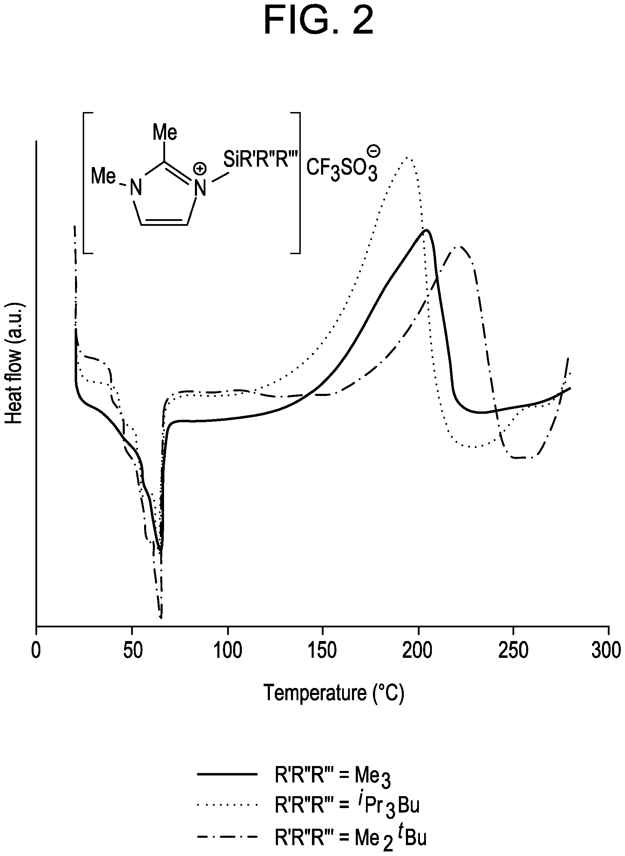

In addition, the active temperature of the silylimidazolium salt complexes of the present invention may be tunable with different identities of the anion X⁻, the substituents R₁-R₄ of the imidazole ring, and the substituents R', R", and R"' of the silyl functional group in the silylimidazolium salt complexes, as shown in Figure 1 and Figure 2.

The active temperature range or the onset and maximum cure temperatures of the silylimidazolium salt complexes of the present invention may be measured by Differential Scanning Calorimetry (DSC).

DSC analysis is a thermoanalytical method used for studying cure profiles of polymers (e.g. epoxy resins). During a curing process, polymers undergo thermal transitions. DSC is used to measure the amount of heat absorbed (endothermic process) or released (exothermic process) during such thermal transitions. The result of DSC analysis is usually a DSC curve of heat flow versus temperature or versus time. A curing profile of a polymer may be obtained by analyzing the DSC curve, which may include, for example, onset and maximum cure temperatures, exothermic peaks of the polymer obtained from DSC.

Figure 1 and Figure 2 illustrate the DSC cure profiles of the epoxy resin compositions using certain preferred examples of the silylimidazolium salt complexes of the present invention as latent catalysts. The epoxy resin compositions used for the DSC analysis in Figure 1 and Figure 2 comprise a mixture of bisphenol A and diglycidyl ether of bisphenol A (DGEBA) and a silyimidazolium salt complex as a latent catalyst. The mole ratio of the bispenol A and the DGEBA of the epoxy resin compositions used in the examples shown in Figure 1 and Figure 2 is about 0.6 to about 1. The silyimidazolium salt complex used in the epoxy resin compositions is about 1 mole percent based on the total weight of the epoxy resin composition.

Figure 1 shows that epoxy resin compositions comprising silyimidazolium salt complexes with different identities of the anion X⁻ have different exothermic peaks (also referred to as "the maximum cure temperature") in the DSC cure profiles. For example, an epoxy resin composition that comprises a silylimidazolium salt complex with halide (e.g. Br⁻ or I⁻) as the anion X⁻ shows an exothermic peak at about 130°C to about 140°C. The epoxy resin compositions comprising silylimidazolium salt complexes with other anions such as BPh₄ (Ph=phenyl), PhSO₃ or MeSO₃ (Me= methyl), PF₆, and CF₃SO₃ as the anions X⁻ in the Formula I above also display different exothermic peaks in the ranges between about 130 °C to about 220 °C, as shown in the following table:

| Anion (X⁻) | Exothermic Peak (°C) |
|---|---|
| Halide | about 130 - 140 |
| BPh₄ | about 145 - 155 |
| PhSO₃ and MeSO₃ | about 160 - 185 |
| PF₆ | about 185 - 200 |
| CF₃SO₃ | about 195- 220 |

Figure 2 shows epoxy resin compositions comprising silyimidazolium salt complexes with different identities of the substituents R', R", and R"' on the silyl functional group display exothermic peaks at different temperatures. For example, epoxy resin compositions comprising a silyimidazolium salt complex with the anion X⁻ such as CF₃SO₃ show a respective shift of the exothermic peaks of the epoxy resin compositions to higher temperature ranges when changing the substituents R', R", and R'" on the silyl functional group of the silylimidazolium salt complexes from -ⁱPr₃, -Me₃ to -Me₂^{t}Bu (ⁱPt=iso propyl, Me=methyl, and ^{t}Bu=tert butyl).

The thermosettable epoxy resin compositions of the present invention comprise (a) an epoxy resin, (b) a curing agent, and c) a latent catalyst; wherein the latent catalyst comprises one or more of the silylimidazolium salt complexes of the present invention. The preferred examples of the latent catalyst may include the silylimidazolium salt complexes represented by the Formula I above. The latent catalyst represented by Formula I of the present invention may also be tunable by changing the anion X⁻, the imidazole ring substituents R₁-R₄, and the silyl functional group substituents R', R", and R"' of the silylimidazolium salt complex for various high curing temperatures.

The amount of the latent catalyst used in the thermosettable epoxy resin composition of the present invention will mainly depend upon the desired active temperature of the latent catalyst and the percent conversion of the epoxy resin. An increase in the latent catalyst concentration typically induces a shift in the exothermic peak in the DSC curve or active temperature of the latent catalyst to a lower temperature. Accordingly, for higher temperature curing, a lower catalyst concentration is preferred. However, an increase in the catalyst concentration may result in an increase in the glass transition temperature (Tg) of the resulting epoxy resin.

In general, the latent catalyst may be present from 0.1 to 10 mole percent, preferably, from 0.1 to 5 mole percent, and more preferably, from 0.1 to 1 mole percent based on the total moles of the epoxy resin present in the thermosettable epoxy resin composition for the latent catalyst to be active. The exothermic peak of the epoxy resin composition obtained by DSC may be shifted to a lower temperature by increasing the latent catalyst concentration in the thermosettable epoxy resin composition.

The epoxy resin suitable for the thermosettable epoxy resin composition of the present invention may be any compound or mixture of compounds that comprises on average more than one epoxide group per molecule. Examples of the epoxy resin may include low molecular weight or higher molecular weight advanced epoxy resins and liquid epoxy resins or solid epoxy resins. The epoxy resin preferably has an epoxy equivalent weight (EEW) of at least about 100, and more preferably at least about 170. The EEW of the epoxy resin is preferably no more than about 10,000, and more preferably no more than about 3,000.

Specific examples of the epoxy resin suitable for the thermosettable epoxy resin composition may include one or more poly(glycidyl ether) or poly(glycidyl ester) compounds including a poly(glycidyl ether) derived from a bisphenol compound, a bisphenol compound, a trisphenol compound, a novolac, an aliphatic diol or a halogenated variation of those compounds. The epoxy resin most preferably comprises a diglycidyl ether of bisphenol A, a bisphenol F, or a halogenated diglycidyl ether of bisphenol A, or a halogenated bisphenol F.

Examples of known epoxy resins that may be used in the present invention, include diglycidyl ethers of resorcinol, catechol, hydroquinone, bisphenol, bisphenol A, bisphenol AP (1,1-bis(4-hydroxylphenyl)-1-phenyl ethane), bisphenol F, bisphenol K, tetrabromobisphenol A, phenol-formaldehyde novolac resins, alkyl substituted phenol-formaldehyde resins, phenol-hydroxybenzaldehyde resins, cresol-hydroxybenzaldehyde resins, dicyclopentadiene-phenol resins, dicyclopentadiene-substituted phenol resins tetramethylbiphenol, tetramethyl-tetrabromobiphenol, tetramethyltribromobiphenol, tetrachlorobisphenol A, and any combination thereof.

The epoxy resins useful in the present invention are well known in the art. Illustrative epoxy resins useful in the practice of the present invention are described in Kirk-Other Encyclopedia of Chemical Technology by H. Q. Pham and M. J. Marks published in 2005 by Wiley-Interscience, Hoboken, NJ (pp 347-471); Handbook of Epoxy Resins by H.E. Lee and K. Neville published in 1967 by McGraw-Hill, New York; and U.S. Patent No. 4,066,628.

The curing agent suitable for the thermosettable epoxy resin composition of the present invention may be any co-reactive curing agent materials known to be useful for curing epoxy resin based coating compositions. Such curing agent materials include, for example, polyamine, polyamide, polyaminoamide, dicyandiamide, polyphenol, polymeric thiol, polycarboxylic acid and anhydride, and any combination thereof. Other specific examples of the curing agent include phenol novolacs, bisphenol-A novolacs, phenol novolac of dicyclopentadiene, styrene-maleic acid anhydride (SMA) copolymers, and any combination thereof.

The ratio of the curing agent to the epoxy resin may vary depending upon the curing agent selected and the intended use of the thermosettable epoxy resin composition. In 9 general, the equivalent ratio of the curing agent to the epoxy resin is from about 0.01 to about 100, preferably from about 0.1 to about 10, more preferably from about 0.2 to about 5, and most preferably from about 0.5 to about 2.

It has been discovered in the present invention that the latent catalysts of the present invention for curing epoxy resins have improved latency relative to the 2-methylimidazole-boric acid catalyst currently used for curing epoxy resins.

For example, with 1 mole percent latent catalyst present in the thermosettable epoxy resin composition, the 2-methylimidazole-boric acid catalyst has an active temperature at about 140°C, while most of the silylimidazolium salt complexes of the present invention have active temperatures reaching as high as about 180°C to about 230°C. Furthermore, the onset cure temperature for the 2-methylimidazole-boric acid catalyst is about 80°C, which is also lower than those of the silylimidazolium salt complexes of the present invention, which have onset cure temperatures ranging between about 100°C to about 150°C.

The thermosettable epoxy resin composition of the present invention comprising the silylimidazolium salt complexes or imidazolium salt complexes as latent catalysts may be used in many applications. In particular, the thermosettable epoxy resin composition of the present invention is useful for applications requiring a high heat resistance and a good storage stability (e.g. to allow epoxy resins to be inert at normal storage conditions and cure at high temperatures of up to about 230°C). For example, the thermosettable epoxy resin composition may be used in electrical applications such as electrical laminate applications.

The thermosettable epoxy resin compositions comprising the latent catalysts of the present invention may also be used in powder coatings applications including, for example, to protect steel pipes used in pipeline constructions, concrete reinforcing rebars, and on a wide variety of piping connections and valves from deterioration due to corrosion.

The thermosettable epoxy resin composition of the present invention may be prepared in a powder coating form at an atmospheric temperature (e.g. 760 mm Hg at 25°C). The epoxy resin and the curing agent in the powder coating remain inert at normal storage conditions. At a typical powder coating application temperature (e.g. from about 180°C to 250°C), the powder coating may be melted and transformed to a liquid form which may be applied to or flowed onto a substrate (e.g. a steel substrate) surface and, subsequently, the applied powder coating may be transient into a solid coating by chemical cross-linking and/or heating.

Other applications of the thermosettable epoxy resin composition of the present invention may include, for example, coatings, structural laminates, electrical or structural composites, moldings, castings, encapsulations, or the like.

The following examples further illustrate the present invention in detail but are not to be construed to limit the scope thereof.

### EXAMPLES

The following standard analytical equipment and methods are used in the Examples and Comparative Experiments:

### ¹H and ¹³C Nuclear Magnetic Resonance (NMR) spectroscopy

In a typical NMR experiment, 5-10 mg of solid silylimidazolium complex was dissolved in 0.5 mL of deuterated solvent, such as CD₂Cl₂ or CD₃CN. ¹H, ¹³C NMR spectra were recorded using a Varian Inova NMR spectrometer with operating frequencies 300 and 75.4 MHz, respectively. ¹H and ¹³C NMR spectra were referenced to SiMe₄ using the residual proton signal of the deuterated solvent.

### Differential Scanning Calorimetry (DSC)

DSC experiments were carried out according to ASTM D3418/E1356 method as follows:
DSC samples were weighed and sealed in an aluminum hermetic DSC pan (P/N 900793.901 pans and 900794.901 lids). Each DSC sample weight was roughly 10 mg. The samples were scanned in a TA (Thermal Analysis) Instruments Q2000 DSC (P/N 970001.901) (S/N 2000.0884) with an autosampler, a nitrogen purge of 50 ml/minute, and mechanical cooling accessories.
DSC experiments were carried out under dynamic conditions in a heat-cool-heat cycle. First, the DSC samples were heated from 20°C to 280°C with a heating rate of 2°C/minute. The DSC samples were cooled to 20°C at 10°C/minute and then rescanned from 25 °C to 280°C at 10°C/minute. The scans were analyzed using Universal Analysis V4.3A software. Weight loss of the DSC samples was calculated from the difference between the initial weight of the DSC sample and the final weight of the DSC sample after the scanning run.

### Example 1

A silylimidazolium salt complex was synthesized using the following reactant A and reactant B:
Reactant A (imidazole):
   Nmethylimidazole,
   1,2-dimethylimidazole, or
   1-methyl-2-phenylimidazole
Reactant B (Silylating reagent):
   R'R"R"'SiX reagent, wherein R', R", and R"' each represents Me, Et, *ⁱ*Pr, or *^{t}*Bu (Me=methyl, Et=ethyl, *ⁱ*Pr=isopropyl, and *^{t}Bu* =tert-butyl) and X represents halide (e.g. Br⁻ or I⁻) or R-SO₃; wherein R represents an alkyl group, an alkoxy group, an aryl group, or CF₃⁻.

A solution of reactant A (12.5 mmol) in diethyl ether (Et₂O) (6 mL) was reacted with a solution of reactant B (12.5 mmol) in Et₂O (4 mL) at room temperature (about 25°C). The solution of reactants A and B was stirred continuously for 30 minutes at room temperature (about 25°C). The reaction is an exothermic reaction which was accompanied by immediate precipitation of a white solid product. The white solid product was then collected by filtration, washed with Et₂O, and dried under vacuum to obtain the silylimidazolium salt complex final product. Yields are typically in the range of about 80% to about 95%. The white solid product was characterized by ¹H and ¹³C NMR spectroscopy described above.

### Example 2

For a silylimidazolium salt complex with anion X⁻ in which the corresponding reactant B (R'R"R"'SiX reagent) is unavailable, the silylimidazolium salt complex can be prepared salt metathesis reaction as exemplified by the following example:
1-methyl-3(trimethylsilyl)imidazolium bromide (1 mmol) and potassium hexafluorophosphate KPF₆ (1 mmol) were added together with acetonitrile (CH₃CN) (5 mL) used as a solvent. A precipitate of potassium bromide (KBr) formed immediately, which was removed from the reaction mixture via filtration. Then the solvent was removed from the resultant product under vacuum. The product was then washed with Et₂O and dried under vacuum. The product was characterized by ¹H and ¹³C NMR spectroscopy described above to be 1-methyl-3(trimethylsilyl)imidazolium hexafluorophosphate in quantitative yield.

The above procedure in Example 2 can be used to prepare other silylimidazolium complexes of the present invention with various anions.

### Example 3

Samples of thermosettable epoxy resin compositions comprising the silylimidazolium salt complexes obtained from Example 1 or Example 2 above were prepared in the range from 1 to 5 mol% by any one of the following two methods:
1. A mixture of diglycidyl ether of bisphenol A (DGEBA) (50 g, 0.15 mol) and bisphenol A (20 g, 0.9 mol) was heated to 130°C to yield a homogeneous solution. The homogeneous solution of the DGEBA and bisphenol A was then allowed to cool rapidly to room temperature. If the bisphenol A crystallizes from the homogeneous solution during cooling, the heating and cooling processes may be repeated. Aliquots (approximately 1 g) of the homogeneous solution of the DGEBA and bisphenol A were then added to a solid silylimidazolium salt complex catalyst. The resulting liquid mixture and the solid silylimidazolium salt complex catalyst were manually agitated until a homogeneous mixture was obtained; or
2. A mixture of DGEBA (1.0 g, 2.9 mmol) and bisphenol A (0.4 g, 1.7 mmol) was dissolved in about 3 mL of 3:1 CH₂Cl₂:Et₂O to form a solution. The solution of the DGEBA and the bisphenol A was then added to a solid silylimidazolium salt complex catalyst with stirring to form a homogeneous mixture at room temperature. The CH₂Cl₂:Et₂O solvent was removed from the homogenous mixture by placing the sample under vacuum for 4 hours.

The active temperatures of the resultant homogeneous mixtures (epoxy resin compositions comprising the silylimidazolium salt complexes) were measured by DSC using the DSC method described above and the results are shown in Figures 1 and 2.

### Example 4

Twenty three complexes were prepared according to the method of Example 1. The identities of the R₁, R₂ and SiR'R"R'" functionalities are shown in Table I, below (R₃ and R₄ = H for each compound). Thermal analysis of the dynamic curing processes in a phenolic (0.6:1 bisphenol A:diglycidyl ether bisphenol A (DGEBA)) epoxy system using 1-5 mol% catalyst (relative to DGEBA) was carried out using DSC. For each sample, the reaction was monitored from 25-280°C with a scanning rate of 2°C/min., allowed to cool to room temperature, and then rescanned to determine Tg. Data for the series of silylimidazolium complexes are summarized in Table I.

**Table 1. Summary of the DSC data for the Silylimidazolium Complexes I-23.**

| | | | | | Dynamic DSC under N₂ | | | | | |
|---|---|---|---|---|---|---|---|---|---|---|
| Complex | R₁ | R₂ | SiR'R"R'" | X^{?} | Tₚₑₐₖ (°C) | ΔH (Jg)*^{a}* | *T*ₚₑₐₖ (°C) | ΔH (Jg) *^{a}* | Conversion (%) *^{b}* | Tg (°C) *^{c}* |
| 1 | Me | H | SiMe₃ | Br | 135.3 | 187.9 | 247.6 | 55.5 | 70 | 75 |
| 2 | Me | Me | SiMe₃ | Br | 133.6 | 202.8 | 243.8 | 51.0 | 73 | 78 |
| 3 | Me | H | SiEt₃ | Br | 120.1 | 139.0 | 238 | 50.3 | 55 | 75 |
| 4 | Me | Me | SiEt₃ | Br | 133.8 | 135.6 | 247.4 | 85.0 | 64 | 81 |
| 5 | Me | H | SiMe₃ | I | 138.3 | 169.1 | 246.8 | 106.8 | 79 | 70 |
| 6 | Me | Me | SiMe₃ | I | 130.1 | 168.6 | 245.9 | 113.4 | 81 | 78 |
| 7 | Me | H | SiMe₃ | CF₃SO₃ | 200.7 | 66.7 | 234.2 | 228.5 | 85 | 75 |
| 8 | Me | Me | SiMe₃ | CF₃SO₃ | 203.7 | 203.4 | -------- | -------- | 58 | 66 |
| 9 | Me | Ph | SiMe₃ | CF₃S_{O3} | 209.1 | 196.5 | -------- | -------- | 57 | 65 |
| 10 | Me | H | Si*ⁱ*Pr₃ | CF₃S_{O3} | 197.0 | 208.4 | -------- | -------- | 60 | 53 |
| 11 | Me | Me | Si*ⁱ*Pr₃ | CF₃S_{O3} | 195.3 | 210.5 | -------- | -------- | 69 | 73 |
| 12 | H | Me | SiMe₂*^{t}*Bu | CF₃S_{O3} | 212.7 | 160.6 | -------- | -------- | 46 | 65 |
| 13 | Me | H | SiMe₂*^{t}*Bu | CF₃SO₃ | *_{d}* | *_{d}* | -------- | -------- | *d* | 63 |
| 14 | Me | Me | SiMe₂*^{t}*Bu | CF₃SO₃ | 222.3 | 121.8 | -------- | -------- | 35 | 63 |
| 15 | Me | Ph | SiMe₂*^{t}*Bu | CF₃S_{O3} | 218.3 | 166.2 | -------- | -------- | 48 | 62 |
| 16 | Me | H | SiMe₃ | MeSO₃ | 195.8 | 164.1 | -------- | -------- | 56 | 72 |
| 17 | Me | Me | SiMe₃ | MeSO₃ | 171.7 | 203.9 | -------- | -------- | 59 | 56 |
| 18 | Me | H | SiMe₃ | PhSO₃ | 183.9 | 209.9 | -------- | -------- | 61 | 54 |
| 19 | Me | Me | SiMe₃ | PhSO₃ | 158.3 | 199.5 | -------- | -------- | 58 | 82 |
| 20 | Me | H | SiMe₃ | PF₆ | 200.5 | 151.2 | -------- | -------- | 44 | 71 |
| 21 | Me | Me | SiMe₃ | PF₆ | 188.0 | 192.8 | -------- | -------- | 56 | 69 |
| 22*^{e}* | Me | H | SiMe₃ | BPh₄ | 151.8 | 295.0 | -------- | -------- | 86 | 107 |
| 23*^{e}* | Me | Me | SiMe₃ | BPh₄ | 144.8 | 188.2 | 187.9 | 36.2 | 65 | 99 |

| | | | | | | | | | | |
|---|---|---|---|---|---|---|---|---|---|---|
| **"Obtained by linear integration of the DSC peaks. Data for a second isotherm is included only for samples in which a clear higher temperature peak is present, *^{b}*Calculated using an estimated reaction enthalpy of 20 kcal/mol for both epoxy homopolymerization and epoxy-phenol reactions. *^{c}*Estimated from DSC data. *^{d}*Reliable integration data could not be obtained. *^{e}*NMR spectroscopy suggests rapid dissociation to imidazole-BPh₃ complex in solution.** | | | | | | | | | | |

## Claims

1. The use as a latent catalyst for curing an epoxy resin of a silylimidazolium salt complex represented by the following Formula I: 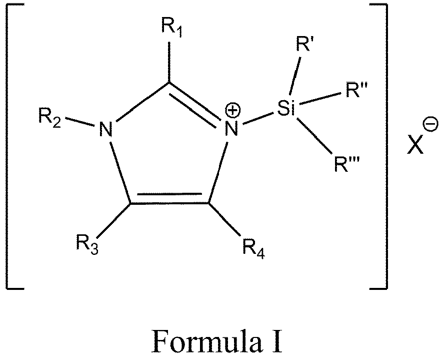 wherein
R₁-R₄ are substituents of the imidazole ring and R₁-R₄ each independently represents an organic group that forms a stable imidazole ring within the silylimidazolium salt complex;
R', R" and R'" are substituents of the silyl functional group and R', R", and R'" each independently represents an organic group that forms a stable silyl function group within the silylimidazolium salt complex; and
X⁻ is an anion which forms a stable salt complex with the silylimidazolium cation within the silyimidazolium salt complex.

2. The use according to claim 1, wherein the anion X⁻ comprises a halide, R-SO₃⁻, PF₆⁻, or BR₄⁻; and wherein R represents a halide, a substituted or unsubstituted alkyl group, a substituted or unsubstituted alkoxy group, a substituted or unsubstituted aryl group, or CF₃⁻.

3. The use according to claim 1, wherein the substituents R₁-R₄ each independently represents a hydrogen atom, a substituted or unsubstituted alkyl, a substituted or unsubstituted alkoxy, or a substituted or unsubstituted aryl group.

4. The use according to claim 1, wherein the substituents R', R" and R"' each independently represents a substituted or unsubstituted alkyl, a substituted or unsubstituted alkoxy, or a substituted or unsubstituted aryl group.

5. The use according to claim 1, wherein the catalyst is inert at room temperature and active at a temperature greater than 120 °C.

6. The use according to claim 5, wherein the active temperature of the catalyst is from 120 °C to 230 °C.

7. The use according to claim 6, wherein the active temperature of the catalyst is from 150 °C to 230 °C.

8. The use according to claim 7, wherein the active temperature of the catalyst is from 180 °C to 220 °C.

9. A thermosettable epoxy resin composition comprising a) an epoxy resin, b) a curing agent, and c) a catalyst; wherein the catalyst comprises a silylimidazolium salt complex as defined in any one of claims 1 to 8.

10. The composition according to claim 9, wherein the catalyst is present in an amount of 0.1 to 10 moles percent based on the total mole percent of the epoxy resin present in the composition.

11. The composition according to claim 10, wherein the catalyst is present in an amount of 0.1 to 5 moles percent based on the total mole percent of the epoxy resin present in the composition.

12. The composition according to claim 11, wherein the catalyst is present in an amount of 0.1 to 1 mole percent based on the total mole percent of the epoxy resin present in the composition.

## Patentansprüche

1. Die Verwendung, als ein latenter Katalysator zum Aushärten eines Epoxidharzes, eines Silylimidazoliumsalzkomplexes, dargestellt durch die folgende Formel I: 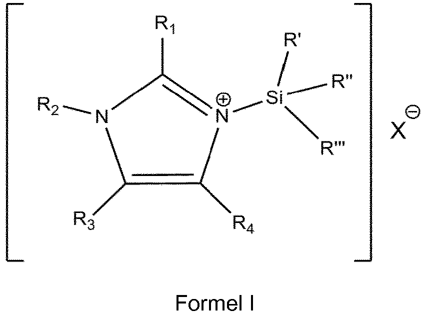 wobei
R₁-R₄ Substituenten des Imidazolrings sind und R₁-R₄ jeweils unabhängig eine organische Gruppe darstellen, die einen stabilen Imidazolring innerhalb des Silylimidazoliumsalzkomplexes bildet;
R', R" und R"' Substituenten der funktionellen Silylgruppe sind und R', R" und R"' jeweils unabhängig eine organische Gruppe darstellen, die eine stabile funktionelle Silylgruppe innerhalb des Silylimidazoliumsalzkomplexes bildet; und
X⁻ ein Anion ist, das einen stabilen Salzkomplex mit dem Silylimidazoliumkation innerhalb des Silylimidazoliumsalzkomplexes bildet.

2. Verwendung gemäß Anspruch 1, wobei das Anion X⁻ ein Halogenid, R-SO₃⁻, PF₆⁻ oder BR₄⁻ beinhaltet; und wobei R ein Halogenid, eine substituierte oder nicht substituierte Alkylgruppe, eine substituierte oder nicht substituierte Alkoxygruppe, eine substituierte oder nicht substituierte Arylgruppe oder CF₃⁻ darstellt.

3. Verwendung gemäß Anspruch 1, wobei die Substituenten R₁-R₄ jeweils unabhängig ein Wasserstoffatom, eine substituierte oder nicht substituierte Alkyl-, eine substituierte oder nicht substituierte Alkoxy- oder eine substituierte oder nicht substituierte Arylgruppe darstellen.

4. Verwendung gemäß Anspruch 1, wobei die Substituenten R', R" und R"' jeweils unabhängig eine substituierte oder nicht substituierte Alkyl-, eine substituierte oder nicht substituierte Alkoxy- oder eine substituierte oder nicht substituierte Arylgruppe darstellen.

5. Verwendung gemäß Anspruch 1, wobei der Katalysator bei Raumtemperatur inert ist und bei einer Temperatur von mehr als 120 °C aktiv ist.

6. Verwendung gemäß Anspruch 5, wobei die aktive Temperatur des Katalysators von 120 °C bis 230 °C beträgt.

7. Verwendung gemäß Anspruch 6, wobei die aktive Temperatur des Katalysators von 150 °C bis 230 °C beträgt.

8. Verwendung gemäß Anspruch 7, wobei die aktive Temperatur des Katalysators von 180 °C bis 220 °C beträgt.

9. Eine hitzehärtbare Epoxidharzzusammensetzung, die Folgendes beinhaltet: a) ein Epoxidharz, b) ein Aushärtungsmittel und c) einen Katalysator; wobei der Katalysator einen Silylimidazoliumsalzkomplex wie in einem der Ansprüche 1 bis 8 definiert beinhaltet.

10. Zusammensetzung gemäß Anspruch 9, wobei der Katalysator, bezogen auf das Gesamtmolprozent des Epoxidharzes, das in der Zusammensetzung vorhanden ist, in einer Menge von 0,1 bis 10 Molprozent vorhanden ist.

11. Zusammensetzung gemäß Anspruch 10, wobei der Katalysator, bezogen auf das Gesamtmolprozent des Epoxidharzes, das in der Zusammensetzung vorhanden ist, in einer Menge von 0,1 bis 5 Molprozent vorhanden ist.

12. Zusammensetzung gemäß Anspruch 11, wobei der Katalysator, bezogen auf das Gesamtmolprozent des Epoxidharzes, das in der Zusammensetzung vorhanden ist, in einer Menge von 0,1 bis 1 Molprozent vorhanden ist.

## Revendications

1. L'utilisation comme catalyseur latent pour vulcaniser une résine époxy d'un complexe de sel de silylimidazolium représenté par la Formule I suivante : 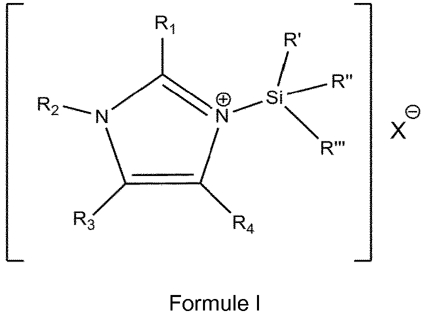 dans laquelle
R₁-R₄ sont des substituants du cycle d'imidazole et R₁-R₄ représentent chacun indépendamment un groupe organique qui forme un cycle d'imidazole stable au sein du complexe de sel de silylimidazolium ;
R', R" et R'" sont des substituants du groupe fonctionnel silyle et R', R", et R'" représentent chacun indépendamment un groupe organique qui forme un groupe de fonction silyle stable au sein du complexe de sel de silylimidazolium ; et
X- est un anion qui forme un complexe de sel stable avec le cation de silylimidazolium au sein du complexe de sel de silylimidazolium.

2. L'utilisation selon la revendication 1, dans laquelle l'anion X- comprend un halogénure, R-SO₃⁻, PF₆⁻ ou BR₄⁻; et dans laquelle R représente un halogénure, un groupe alkyle substitué ou non substitué, un groupe alcoxy substitué ou non substitué, un groupe aryle substitué ou non substitué, ou CF₃⁻.

3. L'utilisation selon la revendication 1, dans laquelle les substituants R₁-R₄ représentent chacun indépendamment un atome d'hydrogène, un alkyle substitué ou non substitué, un alcoxy substitué ou non substitué, ou un groupe aryle substitué ou non substitué.

4. L'utilisation selon la revendication 1, dans laquelle les substituants R', R" et R'" représentent chacun indépendamment un alkyle substitué ou non substitué, un alcoxy substitué ou non substitué, ou un groupe aryle substitué ou non substitué.

5. L'utilisation selon la revendication 1, dans laquelle le catalyseur est inerte à température ambiante et actif à une température supérieure à 120 °C.

6. L'utilisation selon la revendication 5, dans laquelle la température active du catalyseur va de 120 °C à 230 °C.

7. L'utilisation selon la revendication 6, dans laquelle la température active du catalyseur va de 150 °C à 230 °C.

8. L'utilisation selon la revendication 7, dans laquelle la température active du catalyseur va de 180 °C à 220 °C.

9. Une composition de résine époxy thermodurcissable comprenant a) une résine époxy, b) un agent de vulcanisation, et c) un catalyseur ; dans laquelle le catalyseur comprend un complexe de sel de silylimidazolium tel que défini dans n'importe laquelle des revendications 1 à 8.

10. La composition selon la revendication 9, dans laquelle le catalyseur est présent dans une quantité de 0,1 à 10 pour cent en moles rapporté au pourcentage molaire total de la résine époxy présente dans la composition.

11. La composition selon la revendication 10, dans laquelle le catalyseur est présent dans une quantité de 0,1 à 5 pour cent en moles rapporté au pourcentage molaire total de la résine époxy présente dans la composition.

12. La composition selon la revendication 11, dans laquelle le catalyseur est présent dans une quantité de 0,1 à 1 pour cent en moles rapporté au pourcentage molaire total de la résine époxy présente dans la composition.
